# EUROPÄISCHE PATENTSCHRIFT

(11) **EP 3 126 866 B1**
(45) Veröffentlichungstag und Bekanntmachung des Hinweises auf die Patenterteilung: **11.05.2022**
(21) Anmeldenummer: 15722046.8
(22) Anmeldetag: 30.03.2015
(51) Int. Cl.: G01S 7/4912, G01S 7/481, G01S 7/4911, G01S 17/36, G01S 17/894, G01S 17/931, G01S 17/00

(54) **ERFASSUNGSEINRICHTUNG, INSBESONDERE ZUR NUTZUNG IN EINEM KRAFTFAHRZEUG UND KRAFTFAHRZEUG**
ACQUISITION DEVICE PREFERABLY FOR USE IN A VEHICLE AND VEHICLE
DISPOSITIF DE RECENSEMENT POUR UTILISATION DANS UN VÉHICULE ET VÉHICULE

(30) Priorität: 02.04.2014 DE 102014004787
(43) Veröffentlichungstag der Anmeldung: 08.02.2017
(73) Patentinhaber: Audi AG, 85045 Ingolstadt (DE)
(72) Erfinder: SCHLITTENBAUER, Michael, 85055 Ingolstadt (DE); DALBAH, Yosef, 85049 Ingolstadt (DE)
(74) Vertreter: Herbst, Matthias Heinz
(86) Internationale Anmeldenummer: PCT/EP2015/000676
(87) Internationale Veröffentlichungsnummer: WO 2015/149929

(56) Entgegenhaltungen:
- EP-A1- 1 873 555
- EP-A2- 1 813 965
- US-A1- 2007 181 810
- US-A1- 2012 038 903

## Beschreibung

Die Erfindung betrifft eine Erfassungseinrichtung zur Nutzung in einem Kraftfahrzeug, zur Erfassung eines Bildes mit mehreren Bildpunkten mit jeweils zugeordneter Helligkeitsinformation und zugeordneter Tiefeninformation, umfassend eine Detektoreinrichtung, eine Beleuchtungseinrichtung und eine Steuereinrichtung, wobei die Steuereinrichtung zur Bereitstellung eines Modulationssignals zur Steuerung der Detektoreinrichtung und der Beleuchtungseinrichtung ausgebildet ist, und wobei die Detektoreinrichtung zur Erfassung der Tiefeninformation in Abhängigkeit des Modulationssignals und einer zeitabhängigen Beleuchtungsstärke eines dem jeweiligen Bildpunkt zugeordneten Bereichs der Detektoreinrichtung ausgebildet ist, wobei die Beleuchtungseinrichtung wenigstens ein erstes und ein zweites Leuchtelement umfasst, die voneinander unterschiedliche Beleuchtungsbereiche ausleuchten, wobei die Lage der ersten und zweiten Leuchtelemente festgelegt und bekannt ist,
wobei die Leuchtstärken des ersten und des zweiten Leuchtelements in Abhängigkeit des Modulationssignals gemeinsam modulierbar sind, wobei die Modulationsamplitude der Modulation in Abhängigkeit eines durch die Steuereinrichtung bereitstellbaren ersten und zweiten Amplitudensignals separat für das erste und zweite Leuchtelement vorgegeben ist, wobei die Steuereinrichtung zur Anpassung des ersten und/oder des zweite Amplitudensignals in Abhängigkeit der Tiefeninformation wenigstens eines Bildpunktes ausgebildet ist. Erfassungseinrichtungen, die neben einer Helligkeits- bzw. Farbinformation eines Bildes zusätzliche Tiefeninformationen zu Bildpunkten aufnehmen, gewinnen, insbesondere im Bereich der Kraftfahrzeugsensorik, zunehmend an Bedeutung. Eine Möglichkeit zur Bestimmung von Tiefeninformationen, also von Abständen von Objekten, sind sogenannte Time-Of-Flight bzw. Laufzeitmessungen. Als Bildsensoren können hierfür sogenannten Fotomischdetektoren, auch PMD-Sensor genannt, genutzt werden. Bei einer derartigen Tiefenerfassung wird eine künstliche Lichtquelle genutzt, die mit einer vorgegebenen Frequenz in ihrer Leuchtstärke moduliert wird. Zugleich wird eine Biasspannung im Fotomischdetektor mit der gleichen Frequenz und phasenstarr zum Modulationssignal der Lichtquelle moduliert. In Abhängigkeit dieser Biasspannung werden Elektronen, die durch optische Strahlung angeregt werden, abwechselnd auf eine von zwei Elektroden geführt. Der Ladungszustand einer Elektrode entspricht damit einer Lichtmenge, die in Phase mit einer Modulation der Lichtquelle eingefallen ist und die Ladung auf der anderen Elektrode einer Lichtmenge, die gegenphasig zur Modulation der Lichtquelle eingefallen ist. Aus den Ladungen auf den beiden Elektroden lässt sich ein Phasenversatz zwischen der Aussendung von Licht durch die Lichtquelle und dem Empfangen von Licht durch den Sensor ermitteln und damit aus der bekannten Lichtgeschwindigkeit eine Entfernung zu einem das Licht der Lichtquelle zurück in den Sensor reflektierenden Objekt.

Problematisch ist hierbei, dass die durch den Sensor empfangene Lichtintensität zum einen abhängig von dem Reflexionsvermögen von Objekten im Bildbereich ist und zum anderen vom Abstand der reflektierenden Objekte. Befinden sich nun zwei oder mehr Objekte in unterschiedlichem Abstand zur Kamera bzw. weisen zwei oder mehr Objekte ein unterschiedliches Reflexionsvermögen auf, so ist es möglich, dass das Bild der Kamera im Bereich, in dem eines der Objekte abgebildet ist, überbelichtet ist, während das andere Objekt wenig ausgeleuchtet ist. Durch eine zu starke Belichtung eines Objekts kann dabei der erfasste Abstand dieses Objekts verfälscht werden, da eine oder beide der Elektroden mit Ladungen gesättigt sein kann. Bei einer zu schwachen Beleuchtung eines Objekts sinkt hingegen die Genauigkeit der Messung.

Aus der Druckschrift US 2012/0038903 A1 ist ein Flash-Lidar-System bekannt, bei dem die Beleuchtung einer erfassten Szene angepasst werden kann. Es wird ein Multipixeldetektor genutzt, um Informationen bezüglich der Helligkeit in bzw. des Abstands zu bestimmten Bereichen der Szene zu erfassen. Anhand dieser Informationen wird die Beleuchtung der Szene angepasst, wobei verschiedene Bereiche der Szene mit verschiedenen Helligkeiten ausgeleuchtet werden können.

Die Druckschrift US 2007/0181810 A1 offenbart ein Lidarsystem für ein Kraftfahrzeug. Dieses nutzt ein Array von Lasern, die Licht in voneinander unterschiedliche Richtungen abstrahlen und nacheinander aktiviert werden können.

Eine Vorrichtung zur Erfassung von räumlichen Informationen mit mehreren Detektionsvorrichtungen, die jeweils eine separate, intensitätsmodulierte Lichtquelle aufweisen, ist aus der Druckschrift EP 1 873 555 A1 bekannt. Zur Vermeidung von Interferenzen werden die Lichtquellen derart angesteuert, dass ein zeitlicher Überlapp der Lichtabstrahlung verschiedener Lichtquellen vermieden wird.

Die Druckschrift EP 1 813 965 A2 betrifft ein PMD-System (Photonic Mixer Device) zur Abstandsmessung von einem Objekt mit einer ersten und zumindest einer zweiten intensitätsmodulierbaren Sendeeinheit, die an unterschiedlichen Positionen relativ zum Objekt angeordnet sind. Die Phasenlage des Modulationssignals für jede Sendeeinheit ist individuell veränderbar, derart, dass mit jeder der beiden Sendeeinheiten im Wesentlichen gleiche Abstandswerte des Objekts ermittelbar sind.

Der Erfindung liegt damit die Aufgabe zugrunde eine Erfassungseinrichtung zur Bestimmung einer Tiefeninformation anzugeben, die dem gegenüber verbessert ist.

Die Aufgabe wird erfindungsgemäß durch eine Erfassungseinrichtung gemäß Anspruch 1 gelöst.

Erfindungsgemäß wird also vorgeschlagen, mehrere Leuchtelemente zu nutzen, deren Leuchtstärken bzw. Modulationsamplituden separat anpassbar sind. Damit ist es möglich, dass durch eine entsprechende Ansteuerung durch die Steuereinrichtung die Modulationsamplitude und damit die maximale bzw. mittlere Leuchtstärke eines oder mehrere der Leuchtelemente angepasst wird, um das durch die Detektoreinrichtung erfasste Umfeld des Kraftfahrzeugs optimal auszuleuchten. So kann beispielsweise bei Erfassung einer Überbeleuchtung eines Bildbereichs die Amplitude der Modulation eines oder mehrerer der Leuchtelemente reduziert werden, um die Helligkeit im entsprechenden Bildbereich zu senken. Entsprechend kann für unterbeleuchtete Bildbereiche die Amplitude der Modulation eines oder mehrerer der Leuchtelemente erhöht werden. Die erfindungsgemäße Erfassungseinrichtung kann dabei insbesondere eine Time-Of-Flight-Kamera sein, die eine Tiefeninformation in Abhängigkeit einer Laufzeit von Licht erfasst. Als Detektoreinrichtung kann insbesondere ein Phasenmischdetektor genutzt werden. Die Tiefeninformationen sind insbesondere Phasenlagen, die durch den Fotomischdetektor erfasst werden. Die Erfassung einer relativen Phasenlage von empfangenem und ausgesendetem Licht mit Hilfe eines Phasenmischdetektor, dem das Modulationssignal der Lichtquelle zugeführt ist, ist grundsätzlich bekannt und soll hier nicht näher erläutert werden.

Die erfindungsgemäße Erfassungseinrichtung kann auch drei oder mehr Leuchtelemente umfassen, deren Modulationsamplituden in Abhängigkeit von separaten Amplitudensignalen vorgegeben sind. Dabei kann insbesondere für jedes der Leuchtelemente ein separates Amplitudensignal vorgegeben sein, es können jedoch auch für Gruppen von Leuchtelementen, die mehrere Leuchtelemente umfassen, gemeinsame Amplitudensignale vorgegeben sein.

Das Leuchtelement kann insbesondere eine Leuchtdiode sein. Das Leuchtelement kann insbesondere elektromagnetische Strahlung im Infrarotbereich aussenden und/oder die Detektoreinrichtung kann ein Empfindlichkeitsmaximum im Infrarotbereich aufweisen. Alternativ wäre es auch möglich, als Leuchtelemente Leuchtelemente zu nutzen, die elektromagnetische Strahlung im sichtbaren Bereich abgeben. In diesem Fall können beispielsweise Scheinwerfer eines Kraftfahrzeugs oder Leuchtdioden, die ein Teil dieser Scheinwerfer sind, als Leuchtelemente genutzt werden. Die Leuchtelemente erfüllen in diesem Fall sowohl die Funktion, das Umfeld des Kraftfahrzeugs für einen Fahrer zu erleuchten, als auch die Funktion Licht bereitzustellen, dass durch Objekte reflektiert und durch die Detektoreinrichtung wieder empfangen wird, um eine Tiefeninformation zu bestimmen. Dabei ist es vorteilhaft als Modulationsfrequenz des Modulationssignals wenigstens 30 Hz zu nutzen, so dass die Modulation für das menschliche Auge nicht mehr erkennbar ist.

Es ist vorteilhaft, wenn die Phasenlage der Modulation der Leuchtstärke des ersten und des zweiten Leuchtelements bezüglich des Modulationssignals unabhängig von dem ersten und zweiten Amplitudensignal ist. Insbesondere kann in der erfindungsgemäßen Erfassungseinrichtung das Phasenverhalten der Modulation der Leuchtstärke für jedes der Leuchtelemente unabhängig von der Modulationsamplitude sein. Dadurch wird insbesondere erreicht, dass keine Mischphasen erzeugt werden, wodurch trotz der separaten Anpassung der Modulationsamplituden eine einfache Erfassung und Auswertung der Tiefeninformationen möglich ist.

Dem ersten Leuchtelement und dem zweiten Leuchtelement kann jeweils eine Treiberschaltung zugeordnet sein, die das erste bzw. das zweite Leuchtelement in Abhängigkeit des mit dem ersten bzw. dem zweiten Amplitudensignal skalierten Modulationssignals bestromt. Die Treiberschaltung kann dabei insbesondere als ein Verstärker ausgebildet sein, der das Modulationssignal in Abhängigkeit des Amplitudensignals verstärkt. Dabei können sowohl Verstärkungsfaktoren größer 1 als auch Verstärkungsfaktoren kleiner 1 genutzt werden. Alternativ ist es beispielsweise möglich als Modulationssignal ein gepulstes Signal zu nutzen. In diesem Fall kann eine Spannung bzw. ein Strom zur Bestromung des jeweiligen Leuchtelements, die bzw. der in Abhängigkeit des Modulationssignals durch ein Schaltelement geschaltet ist, durch das Amplitudensignal vorgegeben sein. Der Strom bzw. die Spannung können dabei durch eine durch das Amplitudensignal gesteuerte Strom- bzw. Spannungsquelle vorgegeben sein. Eine Stromvorgabe ist auch durch eine Pulswellenmodulation möglich. Um Störungen oder Wechselwirkungen mit dem Modulationssignal zu vermeiden, sollte die Modulation zur Amplitudenanpassung entweder eine wesentlich größere Frequenz aufweisen als die Frequenz des Modulationssignals oder ein ganzzahliges Vielfaches oder ein ganzzahliger Teiler der Modulationsfrequenz sein.

Alternativ zur Skalierung eines Modulationssignals durch eine dem Leuchtelement zugeordnete Treiberschaltung ist es auch möglich, dass die Steuereinrichtung bereits mehrere skalierte Modulationssignale bereitstellt, die zueinander phasenstarr sind, wobei jeweils eines der skalierten Modulationssignale einem der Leuchtelemente bzw. einer Gruppe der Leuchtelemente zugeführt wird.

Es ist besonders vorteilhaft, wenn die Steuereinrichtung zur Anpassung des ersten und/oder des zweiten Amplitudensignals in Abhängigkeit der Helligkeitsinformation wenigstens eines Bildpunktes ausgebildet ist. In diesem Fall kann durch die Steuereinrichtung autonom, das heißt ohne ein Eingreifen eines Benutzers, wenigstens ein Amplitudensignal derart angepasst werden, dass die Ausleuchtung des durch die Detektoreinrichtung erfassten Bereichs verbessert ist. Dabei indiziert eine Helligkeitsinformation für einen Bildpunkt, die oberhalb eines vorgegebenen Grenzwertes liegt, dass die Leuchtstärke wenigstens eines der Leuchtelemente zu hoch ist und dass damit die Modulationsamplitude wenigstens eines Leuchtelements zu reduzieren ist und umgekehrt.

Es ist dabei möglich, dass in der Detektoreinrichtung zwei separate Lichtmengenwerte für jeden der Bildpunkte erfasst werden, aus denen sich sowohl die Helligkeitsinformation als auch die Tiefeninformation berechnet. Beispielsweise werden bei einem Phasenmischdetektor separat Lichtmengenwerte für eine Lichtmenge erfasst, die in Phase mit dem Modulationssignal empfangen wurde und für eine Lichtmenge, die gegenphasig zum Modulationssignal empfangen wurde. In diesem Fall kann die Steuereinrichtung ergänzend oder alternativ zur Anpassung des ersten und/oder des zweiten Amplitudensignals in Abhängigkeit des ersten und/oder zweiten Lichtmengenwertes wenigstens eines Bildpunktes ausgebildet sein.

Erfindungsgemäß ist die Steuereinrichtung zur Anpassung des ersten und/oder des zweiten Amplitudensignals in Abhängigkeit der Tiefeninformation wenigstens eines Bildpunktes ausgebildet. Aus der Tiefeninformation und einer bekannten Abbildungsgeometrie der Detektoreinrichtung kann für einen Bildpunkt eine Position im dreidimensionalen Raum bezüglich der Detektoreinrichtung bestimmt werden, an der das durch den Bildpunkt erfasste Licht reflektiert wurde. Bei der erfindungsgemäßen Erfassungseinrichtung ist die Lage der ersten und zweiten Leuchtelemente bezüglich der Detektoreinrichtung festgelegt und bekannt.

Aus der Lage des Punktes, an dem das erfasste Licht reflektiert wurde wird daher bestimmt, von welchem bzw. von welchen der Leuchtelemente ein reflektierendes Objekt in dem Bereich beleuchtet wird, der durch den entsprechenden Bildpunkt erfasst wird.

Erfindungsgemäß ist die Steuereinrichtung dazu ausgebildet, für wenigstens einen Bildpunkt in Abhängigkeit der Tiefeninformation des Bildpunktes zu bestimmen, ob dieser durch das erste und/oder durch das zweite Leuchtelement beleuchtet ist. Entsprechend kann die Steuereinrichtung in Abhängigkeit der Helligkeitsinformation des Bildpunktes ausschließlich das Amplitudensignal für Leuchtelemente anpassen, die den entsprechenden Bildpunkt tatsächlich beleuchten.

Die Steuereinrichtung kann auch dazu ausgebildet sein, für wenigstens einen ersten Bildpunkt in Abhängigkeit der Tiefeninformation des ersten Bildpunktes und der Tiefeninformation wenigstens eines zweiten Bildpunktes zu bestimmen, ob der erste Bildpunkt durch das erste und/oder das zweite Leuchtelement beleuchtet ist. Es ist insbesondere möglich, dass aus den Tiefeninformationen von mehreren Bildpunkten sowie aus einer bekannten Abbildungsgeometrie der Detektoreinrichtung ein Modell des durch die Detektoreinrichtung erfassten Bereichs des Umfelds bestimmt wird. Mithilfe dieses Modells kann bei der Bestimmung, ob ein bestimmtes Leuchtelement einen Bildpunkt beleuchtet, berücksichtigt werden, ob das Licht dieses Leuchtelements am entsprechenden Bildpunkt durch ein weiteres Objekt, das zwischen dem Leuchtelement und einem an dem Bildpunktabgebildeten Objekt liegt, abgeschirmt ist.

Es ist insbesondere möglich, dass die Steuereinrichtung ausgebildet ist, bei Überschreiten eines Grenzwertes durch die Helligkeitsinformation eines Bildpunktes das Amplitudensignal, dass einem Leuchtelement zugeordnet ist, das diesen Bildpunkt beleuchtet, zur Reduzierung der Amplitude anzupassen. Ergänzend oder alternativ kann bei Unterschreiten eines weiteren Grenzwertes durch die Helligkeitsinformation eines Bildpunktes das Amplitudensignal, das einem Leuchtelement zugeordnet ist, dass diesen Bildpunkt beleuchtet, zur Erhöhung der Amplitude der Modulation angepasst werden.

In einer alternativen Ausführungsform der erfindungsgemäßen Erfassungseinrichtung können jeweils Gruppen von Bildpunkten ermittelt werden, die von der ersten, der zweiten bzw. von beiden Leuchtelementen beleuchtet werden. Entsprechend können bei der Nutzung von mehreren Leuchtelementen auch mehrere Gruppen gebildet werden. Anschließend können die Mittelwerte, der Median oder Ähnliches für die Helligkeitsinformationen dieser Gruppen durch eine entsprechende Anpassung der Amplitudensignale für die Leuchtelemente angeglichen werden.

Daneben betrifft die Erfindung ein Kraftfahrzeug, das eine erfindungsgemäße Erfassungseinrichtung umfasst.

Weitere Vorteile und Einzelheiten der Erfindung zeigen die folgenden Ausführungsbeispiele sowie die zugehörigen Zeichnungen. Dabei zeigen:
- Fig. 1: schematisch ein Ausführungsbeispiel einer erfindungsgemäßen Erfassungseinrichtung,
- Fig. 2: schematisch ein Ausführungsbeispiel eines erfindungsgemäßen Kraftfahrzeugs, und
- Fig. 3: schematisch ein Ausführungsbeispiel zur Erfassung einer Umgebung durch ein Ausführungsbeispiel einer erfindungsgemäßen Erfassungseinrichtung.

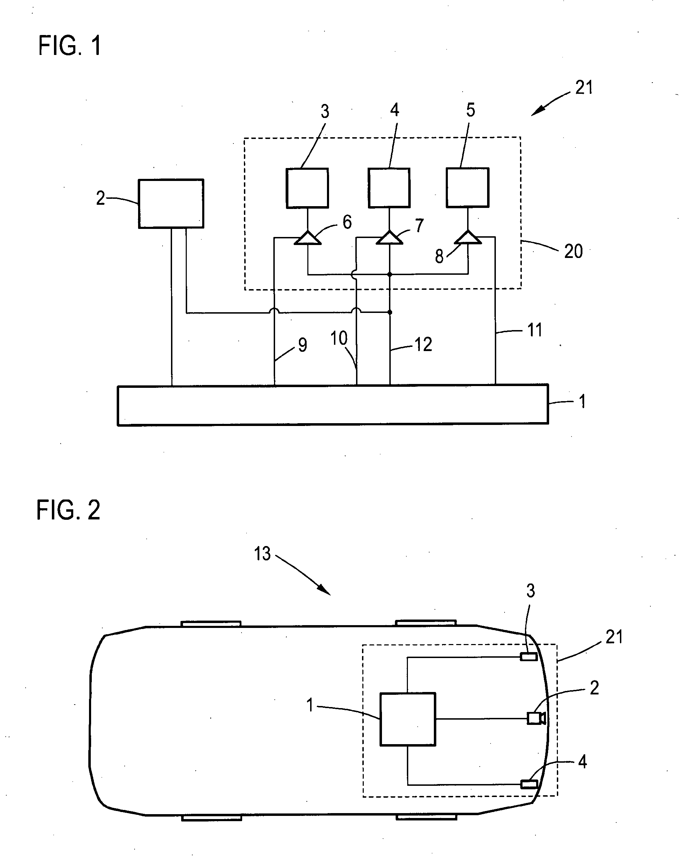

Fig. 1 zeigt eine Erfassungseinrichtung 21 zur Erfassung eines Bildes mit mehreren Bildpunkten mit jeweils zugeordneter Helligkeitsinformation und Tiefeninformation. Die Erfassungseinrichtung 21 umfasst eine Beleuchtungseinrichtung 20 mit einem ersten, einem zweiten und einem dritten Leuchtelement 3, 4, 5 eine Detektoreinrichtung 2 und eine Steuereinrichtung 1. Die Detektoreinrichtung 2 ist dabei als ein Fotomischdetektor ausgebildet, der eine Vielzahl von in einem rechteckigen Raster angeordneten Bildpunkten aufweist. Für jeden dieser Bildpunkte sind zwei Elektroden vorgesehen, die durch auf der Oberfläche der Detektoreinrichtung 2 einfallendes Licht angeregte Elektronen sammeln, um eine Lichtintensität zu bestimmen. Dabei wird durch ein extern durch die Steuereinrichtung 1 zugeführtes Modulationssignal 12 bestimmt, zu welcher der beiden Elektroden die Elektronen geführt werden.

Die Steuereinrichtung 1 stellt hierzu eine Modulationssignal 12 bereit, das eine Rechteckspannung ist. Das Modulationssignal wird zudem über die Treiberschaltungen 6, 7, 8 den Leuchtelementen 3, 4, 5 zugeführt, um deren Leuchtstärke in Abhängigkeit des Modulationssignals 12 zu steuern. Da das Modulationssignal 12 rechteckförmig ist bedeutet dies, dass die Leuchtelemente 3, 4, 5 mit einer vorgegebenen Frequenz an- und ausgeschaltet werden.

Stellen alle Treiberschaltungen 6, 7, 8 ein gleiches Ausgangssignal an die Leuchtelemente 3, 4, 5 zur Verfügung, so bilden die Leuchtelemente 3, 4, 5 effektiv eine gemeinsame Lichtquelle. Wird das durch die Leuchtelemente 3, 4, 5 ausgesandet Licht an Objekten im Umfeld der Erfassungseinrichtung reflektiert, so kann das reflektierte Licht durch die Detektoreinrichtung 2 erfasst werden. Ist der Abstand zum reflektierenden Objekt relativ kurz, so ist die Änderung der Lichtintensität des empfangenen Lichts in Phase mit der Modulation der Leuchtstärke der Leuchtelemente 3, 4, 5 und damit in Phase mit dem Modulationssignal. Die durch das einfallende Licht angeregten Elektronen werden ausschließlich einer Elektrode zugeführt. Mit zunehmendem Abstand des reflektierenden Objekts von den Leuchtelementen 3, 4, 5 bzw. von der Detektoreinrichtung 2 nimmt die Phasenverschiebung zwischen der Intensitätsmodulation des erfassten Lichts und dem Modulationssignal aufgrund der Laufzeit des Lichts zu, weshalb ein zunehmender Teil der Elektronen auf die zweite Elektrode geführt wird.

Aus der Summe der auf den beiden Elektroden gesammelten Ladungen kann für jeden Bildpunkt eine Helligkeitsinformation bestimmt werden. Der Ladungsanteil auf der zweiten Elektrode, der die Elektronen in Intervallen zugeführt werden, in denen die Leuchtelemente 3, 4, 5 nicht betrieben werden, beschreibt den Phasenversatz zwischen dem ausgesendeten Licht und dem empfangenen Licht und damit die Laufzeit des Lichts zwischen den Leuchtelementen 3, 4, 5 und der Detektoreinrichtung 2. Durch die Steuereinrichtung 1 werden die jeweiligen Ladungen der Elektroden der Detektoreinrichtung 2 erfasst, womit zum einen eine Helligkeitsinformation und zum anderen eine Tiefeninformation, die den Abstand des reflektierenden Objekts beschreibt, für jeden Bildpunkt der Detektoreinrichtung 2 bestimmt werden kann.

Dabei ist die Intensität des durch ein Objekt reflektierten Lichts zum einen Abhängig vom Reflexionsvermögen des Objekts und zum anderen vom Abstand des Objekts. Befinden sich mehrere Objekte im Erfassungsbereich der Detektoreinrichtung 2, kann sich die Intensität des durch diese Objekte jeweils reflektierten Lichts stark unterscheiden, weshalb ein Objekt beispielsweise stark überbelichtet sein kann und ein weiteres Objekt unterbelichtet. In der gezeigten Erfassungseinrichtung 21 stehen mehrere Leuchtelemente 3, 4, 5 zur Verfügung und jedem dieser Leuchtelemente 3, 4, 5 ist eine Treiberschaltung 6, 7, 8 zugeordnet, durch die die Amplitude, mit der die Leuchtstärke der Leuchtelemente 3, 4, 5 moduliert wird, anpassbar ist. Die Steuereinrichtung 1 stellt drei Amplitudensignale 9, 10, 11 bereit, die den Treiberschaltungen 6, 7, 8 zugeführt werden.

Da das Modulationssignal 12 ein Pulssignal ist, können die Treiberschaltungen 6, 7, 8 jeweils derart ausgebildet sein, dass ein Schaltelement in Abhängigkeit des Modulationssignals geschaltet wird, das einen Strom bzw. eine Spannung, der bzw. die in Abhängigkeit des jeweiligen Amplitudensignals 9, 10, 11 bereitgestellt wird, dem Leuchtelement 3, 4, 5 zuführt. Alternativ wäre es möglich, die Treiberschaltungen 6, 7, 8 als Verstärkerschaltungen auszubilden, wobei der Verstärkungsfaktor jeweils durch das Amplitudensignal 9, 10, 11 vorgegeben wird. Unabhängig von der konkreten Ausbildung der Treiberschaltungen 6, 7, 8 ist des dabei wesentlich, dass die Phasenlage des Ausgangssignals der Treiberschaltungen 6, 7, 8 bezüglich des Modulationssignals 12 unabhängig von den Amplitudensignalen 9, 10, 11 ist. Die Treiberschaltungen 6, 7, 8 weisen also keine oder zumindest keine amplitudenunabhängige Phasenverschiebung auf.

Durch eine Bereitstellung von Amplitudensignalen 9, 10, 11 durch die Steuereinrichtung wird damit die Modulationsamplitude der Leuchtelemente 3, 4, 5, und damit auch die durch die Detektioreinrichtung 2 empfangene Lichtmenge angepasst.

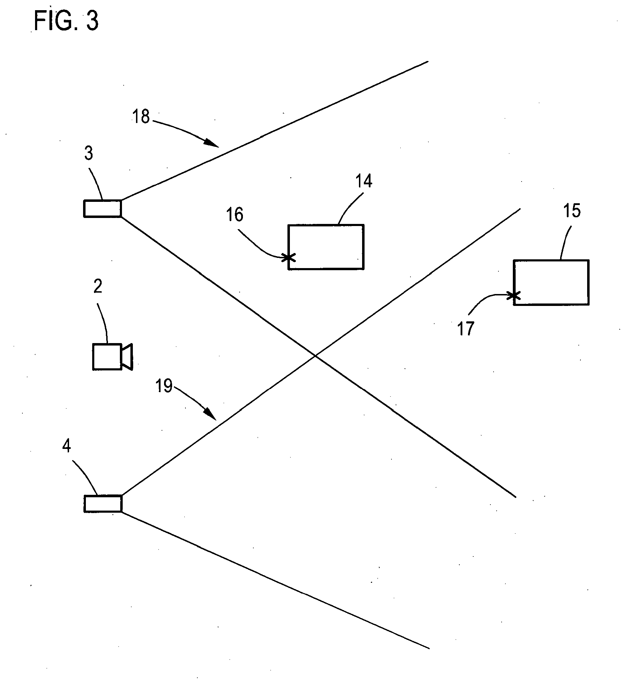

Da separate Amplitudensignale 9, 10, 11 für die Leuchteinrichtungen 3, 4, 5 bereitgestellt werden, kann die Modulationsamplitude für jedes der Leuchtelemente 3, 4, 5 separat variiert werden. Beispiele hierfür werden im Folgenden noch detailliert mit Bezug auf Fig. 3 beschrieben.

Fig. 2 zeigt ein Kraftfahrzeug 13, das eine Erfassungseinrichtung 21 zur Erfassung eines Bildes mit mehreren Bildpunkten mit jeweils zugeordneter Helligkeitsinformationen zugeordnete Tiefeninformation umfasst. Die Erfassungseinrichtung 21 umfasst dabei eine Steuereinrichtung 1, ein erstes Leuchtelement 3, ein zweites Leuchtelement 4 sowie eine Detektoreinrichtung 2. Im Kraftfahrzeug 13 ist eine separate Ansteuerung der Leuchtelemente 3, 4 durch die Steuereinrichtung 1 dargestellt. Dabei umfasst die Steuereinrichtung 1 selbst eine separate erste und zweite Treibereinrichtung zur Ansteuerung des ersten und des zweiten Leuchtelements 3, 4. Daher werden durch die Steuereinrichtung 1 bereits skalierte Modulationssignale bereitgestellt, die zueinander phasenstarr sind. Die jeweiligen Amplitudensignale werden ausschließlich intern in der Steuereinrichtung 1 genutzt, um die Modulationssignale zu skalieren.

Fig. 3 zeigt eine Erfassung eines Bildes durch eine Erfassungseinrichtung, die für jeden Bildpunkt, eine Helligkeits- und eine Tiefeninformation erfasst. Die Erfassungseinrichtung ist dabei in einem nicht gezeigten Kraftfahrzeug angeordnet. Im Erfassungsbereich der Erfassungseinrichtung sind zwei Objekte 14, 15, nämlich Kraftfahrzeuge, gezeigt. Die Erfassungseinrichtung umfasst eine Detektoreinrichtung 2, Leuchtelemente 3, 4 sowie eine nicht gezeigte Steuereinrichtung. Sie ist zur klareren Darstellung des Funktionsprinzips mit einem übertriebenen Abstand zwischen den Leuchtelementen 3, 4 und der Detektoreinrichtung 2 dargestellt. Zugleich ist die Darstellung in Querrichtung gestaucht, womit die Abständen zwischen den Objekten 14, 15 und der Detektoreinrichtung 2 verkürzt sind.

Die unabhängige Steuerung der Modulationsamplituden der Leuchtelemente 3, 4 durch separat durch die nicht gezeigte Steuereinrichtung bereitgestellte Amplitudensignale soll beispielhaft für zwei durch die Detektoreinrichtung 2 erfasste Bildpunkte 16, 17 beschrieben werden. Die Helligkeit der Bildpunkte 16, 17 hängt zum einen von dem Abstand der reflektierenden Objekte 14, 15 von den Leuchtelementen 3, 4 bzw. von der Detektoreinrichtung 2 ab, zum anderen von dem Reflexionsvermögen der Objekte 14, 15 in dem Bereich, der durch den Bildpunkt 16, 17 abgebildet wird.

Es soll davon ausgegangen werden, dass der Bildpunkt 16 als sehr hell erfasst wird und den entsprechenden Bildpunkt der Erfassungseinrichtung 2 sättigt. Ein Sättigen eines Bildpunktes kann dabei insbesondere dazu führen, dass eine Tiefeninformation nicht mehr korrekt bestimmt werden kann. Um korrekte Tiefeninformationen auch für den Bildpunkt 16 zu ermitteln, muss die Helligkeit für den Bildpunkt reduziert werden. Dies wäre beispielsweise durch eine Senkung der Amplitude der Modulation der Leuchtstärke beider Leuchtelemente 3, 4 oder durch eine Verringerung der Empfindlichkeit der Detektoreinrichtung 2 möglich. Nachteilig wäre dabei jedoch, dass auch die Helligkeit an Bildpunkt 17 gesenkt wird. Da Bildpunkt 17 weiter entfernt ist liegt an diesem typischerweise eine weit geringere Helligkeit vor, so dass ein weiteres Senken der Helligkeit zu einer Verringerung der Empfindlichkeit und damit insbesondere auch der Auflösung der Tiefeninformation führen würde.

Um dies zu vermeiden ist die nicht gezeigte Steuereinrichtung ausgebildet, ein separates erstes Amplitudensignal für das erste Leuchtelement 3 und ein separates zweites Amplitudensignal für das zweite Leuchtelement 4 bereitzustellen, womit die jeweilige Amplitude der Modulation der Leuchtstärke des Leuchtelements 3, 4 unabhängig anpassbar ist. Die Steuereinrichtung bestimmt zunächst, durch welche der Leuchtelemente 3, 4 der Bildpunkt 16 überhaupt beleuchtet ist. Hierzu bestimmt die Steuereinrichtung eine Tiefeninformation für den Bildpunkt 16, wozu insbesondere kurzfristig beide Amplitudensignale reduziert werden können, um eine Sättigung des Bildpunktes 16 zu vermeiden. Ebenso wird eine Tiefeninformation für den Bildpunkt 17 ermittelt.

Aus den Tiefeninformationen und der bekannten Abbildungsgeometrie der Detektoreinrichtung 2 können die Positionen der Bildpunkte 16, 17 im dreidimensionalen Raum bestimmt werden. Zudem ist die relative Lage der Leuchtelemente 3, 4 zur Detektoreinrichtung 2 bekannt. Somit kann ermittelt werden, dass das Objekt 14 und damit der Bildpunkt 16 ausschließlich im Beleuchtungsbereich 18 des ersten Leuchtelements 3 und das Objekt 15 und damit der Bildpunkt 17 in den Beleuchtungsbereichen 18, 19 beider Leuchtelemente 3, 4 liegt.

Da ausschließlich die Helligkeit an dem Bildpunkt 16 reduziert werden soll, kann das Amplitudensignal für die Leuchteinrichtung 3 angepasst werden, wodurch die Helligkeit an dem Bildpunkt 16 deutlicher reduziert wird als die Helligkeit an Bildpunkt 17. Wie aus Fig. 3 zu erkenne, ist ein besonders geringer Einfluss der Leuchtstärke des Leuchtelements 3 auf die Helligkeit am Bildpunkt 17 zu erwarten, da der Bildpunkt 17 bezüglich dem Leuchtelement 3 durch das Objekt 14 verdeckt ist. Zur Anpassung der Amplitudensignale ist es vorteilhaft, auch derartige Verdeckungen mit zu berücksichtigen.

Daher wird durch die Steuereinrichtung die Tiefeninformation jedes der erfassten Bildpunkte ausgewertet, woraus ein Modell der Umgebung berechnet wird mit dem eine Abschattung von Bildpunkten bezüglich bestimmter Leuchtelemente erkannt wird. Entsprechend wird die bereits erwähnte Verdeckung des Bildpunktes 17 bezüglich des Leuchtelements 3 durch das Objekt 14 durch die Steuereinrichtung erkannt, wodurch erkannt wird, dass die Helligkeit an Bildpunkt 17 ausschließlich vom zweiten Amplitudensignal, das dem zweiten Leuchtelement 4 zugeordnet ist, und die Helligkeit am Bildpunkt 16 ausschließlich von dem ersten Amplitudensignal, das dem ersten Leuchtelement 3 zugeordnet ist, abhängt. Die Steuereinrichtung kann also alle verfügbaren Umfeldinformationen auswerten, um eine möglichst optimale Ausleuchtung des erfassten Umfelds zu erreichen.

## Patentansprüche

1. Erfassungseinrichtung zur Nutzung in einem Kraftfahrzeug (13), zur Erfassung eines Bildes mit mehreren Bildpunkten mit jeweils zugeordneter Helligkeitsinformation und zugeordneter Tiefeninformation, umfassend eine Detektoreinrichtung (2), eine Beleuchtungseinrichtung (20) und eine Steuereinrichtung (1), wobei die Steuereinrichtung (1) zur Bereitstellung eines Modulationssignals (12) zur Steuerung der Detektoreinrichtung (2) und der Beleuchtungseinrichtung (20) ausgebildet ist, und wobei die Detektoreinrichtung (2) zur Erfassung der Tiefeninformation in Abhängigkeit des Modulationssignals (12) und einer zeitabhängigen Beleuchtungsstärke eines dem jeweiligen Bildpunkt zugeordneten Bereichs der Detektoreinrichtung (2) ausgebildet ist, wobei die Beleuchtungseinrichtung (20) wenigstens ein erstes und ein zweites Leuchtelement (3, 4, 5) umfasst, die voneinander unterschiedliche Beleuchtungsbereiche (18, 19) ausleuchten, wobei die Lage der ersten und zweiten Leuchtelemente (3, 4, 5) bezüglich der Detektoreinrichtung (2) festgelegt und bekannt ist, wobei die Leuchtstärken des ersten und des zweiten Leuchtelements (3, 4, 5) in Abhängigkeit des Modulationssignals (12) gemeinsam modulierbar sind, wobei die Modulationsamplitude der Modulation in Abhängigkeit eines durch die Steuereinrichtung (1) bereitstellbaren ersten und zweiten Amplitudensignals (9, 10, 11) separat für das erste und zweite Leuchtelement (3, 4, 5) vorgegeben ist, wobei die Steuereinrichtung (1) zur Anpassung des ersten und/oder des zweite Amplitudensignals (9, 10, 11) in Abhängigkeit der Tiefeninformation wenigstens eines Bildpunktes (16, 17) ausgebildet ist,
wobei
die Steuereinrichtung (1) ausgebildet ist, für den wenigstens einen Bildpunkt (16, 17) in Abhängigkeit der Tiefeninformation des Bildpunktes (16, 17) zu bestimmen, ob dieser durch das erste und/oder durch das zweite Leuchtelement (3, 4, 5) beleuchtet ist.

2. Erfassungseinrichtung nach Anspruch 1,
**dadurch gekennzeichnet,**
**dass** die Phasenlage der Modulation der Leuchtstärke des ersten und des zweiten Leuchtelements (3, 4, 5) bezüglich des Modulationssignals (12) unabhängig von dem ersten und zweiten Amplitudensignal (9, 10, 11) ist.

3. Erfassungseinrichtung nach Anspruch 1 oder 2,
**dadurch gekennzeichnet,**
**dass** dem ersten Leuchtelement (3) und dem zweiten Leuchtelement (4) jeweils eine Treiberschaltung (6, 7, 8) zugeordnet ist, die das erste bzw. das zweite Leuchtelement (3, 4, 5) in Abhängigkeit des mit dem ersten bzw. dem zweiten Amplitudensignal (9, 10, 11) skalierten Modulationssignals (12) bestromt.

4. Erfassungseinrichtung nach einem der vorangehenden Ansprüche, **dadurch gekennzeichnet,**
**dass** die Steuereinrichtung (1) zur Anpassung des ersten und/oder des zweite Amplitudensignals (9, 10, 11) in Abhängigkeit der Helligkeitsinformation wenigstens eines Bildpunktes (16, 17) ausgebildet ist.

5. Erfassungseinrichtung nach einem der vorangehenden Ansprüche, **dadurch gekennzeichnet,**
**dass** die Steuereinrichtung (1) ausgebildet ist, für wenigstens einen ersten Bildpunkt (16, 17) in Abhängigkeit der Tiefeninformation des ersten Bildpunkts (16, 17) und der Tiefeninformation wenigstens eines zweiten Bildpunktes (16, 17) zu bestimmen, ob der erste Bildpunkt durch das erste und/oder das zweite Leuchtelement (3, 4, 5) beleuchtet ist.

6. Erfassungseinrichtung nach einem der vorangehenden Ansprüche, **dadurch gekennzeichnet,**
**dass** die Steuereinrichtung (1) ausgebildet ist, bei Überschreiten eines Grenzwertes durch die Helligkeitsinformation eines Bildpunktes (16, 17) das Amplitudensignal (9, 10, 11), das einem Leuchtelement (3, 4, 5) zugeordnet ist, das diesen Bildpunkt (16, 17) beleuchtet, zur Reduzierung der Modulationsamplitude des Leuchtelements (3, 4, 5) anzupassen.

7. Kraftfahrzeug,
**dadurch gekennzeichnet,**
**dass** es eine Erfassungseinrichtung (21) nach einem der vorangehenden Ansprüche umfasst.

## Claims

1. Acquisition apparatus, for use in a motor vehicle (13), for acquiring an image having a plurality of pixels with respectively assigned brightness information and assigned depth information, comprising a detector apparatus (2), a lighting apparatus (20) and a control apparatus (1), wherein the control apparatus (1) is designed to provide a modulation signal (12) for controlling the detector apparatus (2) and the lighting apparatus (20), and wherein the detector apparatus (2) is designed to acquire the depth information depending on the modulation signal (12) and a time-dependent illuminance of a region of the detector apparatus (2) that is assigned to the respective pixel, wherein the lighting apparatus (20) comprises at least one first and one second luminous element (3, 4, 5) which illuminate different lighting regions (18,19) from one another, wherein the position of the first and second luminous elements (3, 4, 5) with respect to the detector apparatus (2) is fixed and known, wherein the luminosities of the first and the second luminous element (3, 4, 5) are jointly modulatable depending on the modulation signal (12), wherein the modulation amplitude of the modulation is predefined separately for the first and second luminous element (3, 4, 5) depending on a first and second amplitude signal (9, 10, 11) that can be provided by the control apparatus (1), wherein the control apparatus (1) is designed to adapt the first and/or the second amplitude signal (9, 10, 11) depending on the depth information of at least one pixel (16, 17),
wherein the control apparatus (1) is designed to determine, for the at least one pixel (16, 17) depending on the depth information of the pixel (16, 17), whether the latter is illuminated by the first and/or by the second luminous element (3, 4, 5).

2. Acquisition apparatus according to claim 1,
**characterised in that**
the phase position of the modulation of the luminosity of the first and the second luminous element (3, 4, 5) with respect to the modulation signal (12) is independent of the first and second amplitude signal (9, 10, 11).

3. Acquisition apparatus according to claim 1 or 2,
**characterised in that**
the first luminous element (3) and the second luminous element (4) are each assigned a driver circuit (6, 7, 8) which energises the first or the second luminous element (3, 4, 5) depending on the modulation signal (12) scaled with the first or the second amplitude signal (9, 10, 11).

4. Acquisition apparatus according to any of the preceding claims,
**characterised in that**
the control apparatus (1) is designed to adapt the first and/or the second amplitude signal (9, 10, 11) depending on the brightness information of at least one pixel (16, 17),

5. Acquisition apparatus according to any of the preceding claims,
**characterised in that**
the control apparatus (1) is designed to determine, for at least one first pixel (16, 17) depending on the depth information of the first pixel (16, 17) and the depth information of at least one second pixel (16, 17), whether the first pixel is illuminated by the first and/or the second luminous element (3, 4, 5).

6. Acquisition apparatus according to any of the preceding claims,
**characterised in that**
the control apparatus (1) is designed, when the brightness information of a pixel (16, 17) exceeds a limit value, to adapt the amplitude signal (9, 10, 11) assigned to a luminous element (3, 4, 5) which illuminates this pixel (16, 17), in order to reduce the modulation amplitude of the luminous element (3, 4, 5).

7. Motor vehicle,
**characterised in that**
it comprises an acquisition apparatus (21) according to any of the preceding claims.

## Revendications

1. Dispositif d'acquisition destiné à être utilisé dans un véhicule automobile (13) afin d'acquérir une image présentant plusieurs pixels auxquels sont respectivement associées des informations de luminosité et des informations de profondeur, comprenant un dispositif de détection (2), un dispositif d'éclairage (20) et un dispositif de commande (1), dans lequel l'appareil de commande (1) est conçu pour fournir un signal de modulation (12) permettant de commander le dispositif de détection (2) et le dispositif d'éclairage (20), et dans lequel le dispositif de détection (2) est conçu pour acquérir les informations de profondeur en fonction du signal de modulation (12) et d'une intensité d'éclairement, temporellement dépendante, d'une zone du dispositif de détection (2) associée au pixel respectif, dans lequel le dispositif d'éclairage (20) comprend au moins des premier et second éléments lumineux (3, 4, 5) qui éclairent des régions d'éclairage (18, 19) différentes l'une de l'autre, dans lequel la position des premier et second éléments lumineux (3, 4, 5) en se référant au dispositif de détection (2) est fixe et connue, dans lequel les luminosités des premier et second éléments lumineux (3, 4, 5) peuvent être modulées conjointement en fonction du signal de modulation (12), dans lequel l'amplitude de la modulation peut être spécifiée de manière séparée pour les premier et second éléments lumineux (3, 4, 5) en fonction de premier et second signaux d'amplitude (9, 10, 11) pouvant être fournis par l'appareil de commande (1), dans lequel l'appareil de commande (1) est conçu pour adapter le premier et/ou le second signal d'amplitude (9, 10, 11) en fonction des informations de profondeur d'au moins un pixel (16, 17),
dans lequel l'appareil de commande (1) est conçu pour déterminer, en fonction des informations de profondeur du au moins un pixel (16, 17), si ledit pixel (16, 17) est éclairé grâce au premier et/ou au second élément lumineux (3, 4, 5).

2. Dispositif d'acquisition selon la revendication 1,
**caractérisé en ce que**
la position de phase de la modulation de la luminosité des premier et second éléments lumineux (3, 4, 5) en se référant au signal de modulation (12) est indépendante des premier et second signaux d'amplitude (9, 10, 11).

3. Dispositif d'acquisition selon la revendication 1 ou 2,
**caractérisé en ce que**
le premier élément lumineux (3) et le second élément lumineux (4) sont respectivement associés à un circuit d'excitation (6, 7, 8) alimentant en courant le premier ou le second élément lumineux (3, 4, 5) en fonction du signal de modulation (12) redimensionné grâce au premier ou au second signal d'amplitude (9, 10, 11).

4. Dispositif d'acquisition selon l'une quelconque des revendications précédentes, **caractérisé en ce que**
l'appareil de commande (1) est conçu pour adapter le premier et/ou le second signal d'amplitude (9, 10, 11) en fonction des informations de luminosité d'au moins un pixel (16, 17).

5. Dispositif d'acquisition selon l'une quelconque des revendications précédentes, **caractérisé en ce que**
l'appareil de commande (1) est conçu pour déterminer, en fonction des informations de profondeur d'au moins un premier pixel (16, 17) et des informations de profondeur d'au moins un second pixel (16, 17), si le premier pixel (16, 17) est éclairé grâce au premier et/ou au second élément lumineux (3, 4, 5).

6. Dispositif d'acquisition selon l'une quelconque des revendications précédentes, **caractérisé en ce que**
l'appareil de commande (1) est conçu pour adapter le signal d'amplitude (9, 10, 11) associé à un élément lumineux (3, 4, 5) éclairant ledit pixel (16, 17), afin de réduire l'amplitude de modulation de l'élément lumineux (3, 4, 5) lorsqu'une valeur limite est dépassée par les informations de luminosité d'un pixel (16, 17).

7. Véhicule automobile,
**caractérisé en ce que**
ledit véhicule automobile comprend un dispositif d'acquisition (21) selon l'une quelconque des revendications précédentes.
